# EUROPEAN PATENT APPLICATION

(11) **EP 1 994 833 A1**
(43) Date of publication of application: **26.11.2008**
(21) Application number: 07108625.0
(22) Date of filing: 22.05.2007
(51) Int. Cl.: A23G 1/54, A23G 1/50, A23G 3/56, A23G 3/54

(54) **Confectionery product**

(71) Applicant: Nestec S.A., 1800 Vevey (CH)
(72) Inventor: Martin, Thierry, YORK, Yorkshire YO26 6AA (GB)
(74) Representative: Schuller, Cornelis

(57) **Abstract**

The present invention refers to a moulded confectionery product comprising a crisp base and a soft filling, completely enclosed by a moulded shell.

## Description

### Field of the invention

The present invention refers to a moulded confectionery product comprising a crisp base and a soft filling, completely enclosed by a moulded shell.

In a preferred embodiment, the present invention refers to a moulded chocolate confectionery product comprising a wafer base and an aerated soft filling, completely enclosed by a moulded chocolate shell.

### Background of the invention

Moulded chocolate confectionery products containing wafer are well known. Moulding has the advantage of producing an exactly defined product geometry and allows designs and logos to be present on the surface of the confectionery, aiding consumer identification of the product.

EP0086319 describes a soft filling enclosed within two hemispherical wafer shells and enrobed with chocolate. The combination of crisp wafer and soft filling provide an appealing textural contrast to consumers. However, consumers appreciate texture combinations where the soft layer is on top. Familiarity with food combinations where the harder structural material is underneath, such as cheesecake, leads to an expectation that the top teeth will bite through a soft material first before encountering the more solid layer. Unfortunately the process of enclosing a material within a chocolate shell does not normally permit an orientation where the soft material is on top.

W09841105 describes a confectionery product such as a praline where a soft filling is enclosed between two half-shells, a lower shell of wafer and an upper shell of chocolate. However, the whole product is coated in chocolate which does not provide the exact product geometry of a moulded product.

It would be desirable therefore to provide a moulded confectionery product comprising a soft base with a soft filling above, where both the wafer and the filling are enclosed within the moulded shell.

In a preferred embodiment, the moulded confectionery product is a chocolate moulded confectionery product comprising a wafer base with an aerated soft filling above, where both the wafer and the filling are enclosed within the moulded chocolate.

Chocolate products are moulded upside down. To make a moulded chocolate product which completely encloses a filling, a chocolate shell is first formed. This can be formed in a number of ways such as filling the mould with liquid tempered chocolate, cooling briefly and then inverting the mould so that the majority of the chocolate flows out leaving a shell of chocolate and turning the mould once more so that the open side of the shell is uppermost ready to receive a filling. Other methods include depositing a small amount of chocolate into the mould and then inserting a cold metal former such as described in EP0589820 to form a hollow shell. After the shell is formed, a filling such as a filling cream or other confectionery component can be deposited into the mould before a small amount of extra chocolate is added and scraped level with the top of the mould in an operation known as "backing-off'. The mould and its contents are then cooled before the mould is inverted and vibrated and/or twisted so that the moulded chocolate product falls out. The material which was in the bottom of the mould forms the top surface of the final product.

In order to produce a moulded chocolate confectionery product with a soft filling on top and a wafer in the base the filling must be deposited into the moulded shell and then a wafer placed onto the soft filling. To ensure that the wafer does not protrude above the rim of the mould, the wafer must be pushed into place. However, with a soft filling, the wafer tends to displace the filling as it descends into the mould. This is undesirable as the final position of the wafer in the product is no longer controlled, and in the case of aerated soft fillings, the pressure from the wafer tends to liberate air from the filling foam. If air is knocked out of the filling foam, its texture will be compromised and its volume will decrease. With less volume occupied by the foam, the resulting space will be occupied by the backing-off chocolate, altering the weight, ingredient cost and texture of the finished product.

There is a need to find a solution to the problems outlined above, and produce moulded confectionery products comprising a crisp base and a soft filling above, completely enclosed by a moulded chocolate shell.

### Summary of the Invention

Accordingly, the confectionery product according to the invention is a moulded confectionery product comprising a crisp base and a soft filling above, completely enclosed by a moulded chocolate shell.

### Figures

Figure 1 shows different external views of a moulded confectionery product of the invention; side view, end view, top view and perspective view.

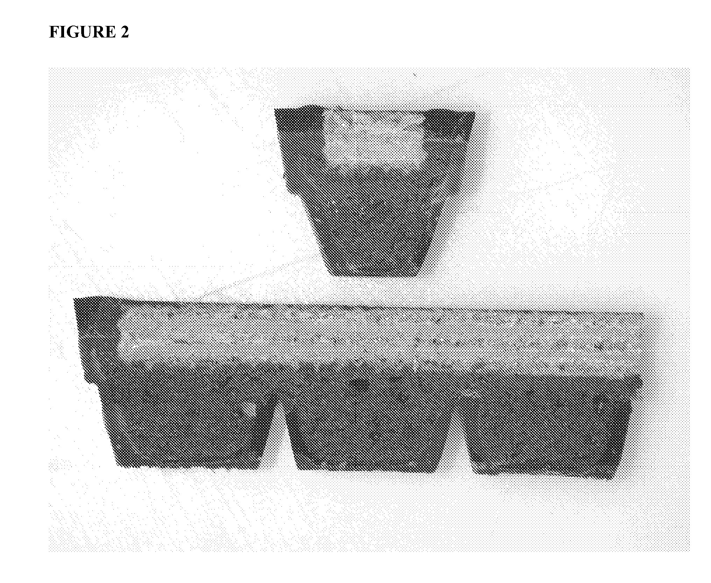

Figure 2 shows two cross sections of a moulded chocolate product according to the invention in the orientation in which it would be moulded. A dark coloured soft aerated cream has been deposited in the bottom of the mould and then a layered wafer finger placed on top before the mould is "backed off" with chocolate. The wafer is held at the correct depth by dividing rib points shown in the lower cross-section.

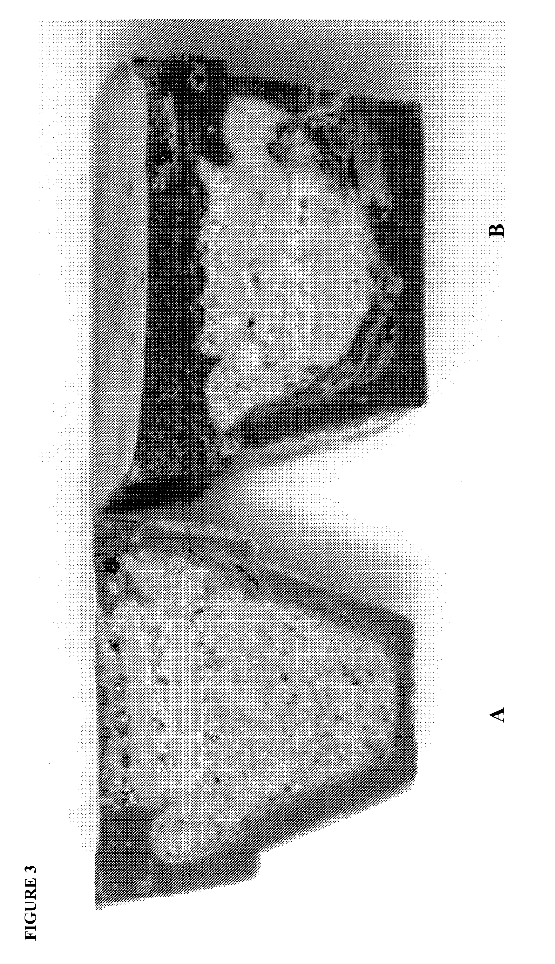

Figure 3 shows a comparison between the product of the invention on left with support means in its moulded shell (not shown) and on the right a product where there are no support means in the moulded shell. In this case a light coloured filling cream has been used. It can be seen that in the product of the invention the wafer finger is maintained in position above the cream, prevented from descending further by the rib points and avoiding the collapse of the aerated cream. For the product on the right, the absence of rib points has lead to the collapse of the cream and a proportion of the cream being displaced above the wafer. The incorrect position of the wafer and collapse of the cream has led to an undesirable thick layer of chocolate occupying the top of the mould.
Figure 4: shows a comparison as Figure 3, but showing a longitudinal cross-section of part of the products where the support means can be seen in the product on the left.

### Detailed Description of the Invention

In the context of the present specification, the term "soft filling" is intended to mean that the filling is readily deformed by a force applied to it, and when measured by penetrometry exhibits a mean penetration force from 1mm to 4mm depth of less than 1.3N, preferably less than 1.0N and most preferably less than 0.5N.

The soft filling can be for example a soft fondant, a suspension of solid material in fat, an oil in water emulsion or a water in oil emulsion. Suitable solid materials would include milk powder, sugar, cocoa powder, fruit powders, or combinations of these. Preferably the soft filling is aerated. The aeration can be visible (macro-aeration) or difficult to see with the unaided eye (micro-aeration). In a preferred embodiment, the soft filling is a confectionery cream comprising soft fat, sugar, milk solids and/or cocoa solids which has been aerated by whipping.

The crisp base enclosed within the moulded confectionery product can be made from sugar, biscuit, extruded cereal or any other suitable edible material, but preferably comprises wafer.

Wafers are thin, with an overall thickness usually between < 1 and 4 mm and typical product densities range from 0.1 to 0.3 g/cm3. The main types of wafer are described by K.F. Tiefenbacher in "Encyclopaedia of Food Science, Food Technology and Nutrition p 417-420 - Academic Press Ltd London - 1993": The production methods outlined by Tiefenbacher are not intended to limit the scope of the invention. In particular, the wafer may be manufactured by extrusion as described in European patent application number EP 06018976.8

In a preferred embodiment the crisp base is a sandwiched wafer biscuit. This is a succession of layers of wafer and filling cream", as described in Tiefenbacher above.

In the product of the invention, the moulded chocolate shell is so formed as to have support means (for example ribs, internal protuberences or dividing walls) which prevent the wafer descending into the chocolate shell and compressing the soft filling. Preferably these ribs partially divide the confectionery product into a number of segments (or edible containers) which make it easy for the consumer to break the bar into portions.

Although the reference to chocolate indicates a preferred solution, it should in no way be interpreted as limiting of the scope of the invention. The term "chocolate" should not be interpreted herein as being limited exclusively to compositions which can be called chocolate within the meaning of the standards for food products which are in force in some countries. The term chocolate used herein should therefore be interpreted as including any product or substance having rheological characteristics similar or substantially comparable to those of chocolate.

In the following description, all percentages are given by weight, unless differently specified.

The aerated filling of the invention is aerated to a density comprised between 0.5 and 0.9 g/cm³, preferably between 0.6 and 0.8 g/cm³, and in the most preferred embodiment the aeration density is 0.7 g/cm³. The aeration can be achieved by the methods commonly used in the art, for example, whipping to incorporate air, incorporation of gas under pressure, expansion under vacuum or any combination of these.

The aerated soft filling can be deposited in the moulded confectionery shell by the following process. A suitable machine that can aerate the filling is a Haas®-Mondomix system. Filling material at the required temperature is fed by pump to a whipping machine. A food-grade gas such as carbon dioxide or nitrogen is introduced into the liquid fat based material under pressure (4-8bar) and at the required flow rate to give the preferred density. This mixture passes with the aid of the feed pump to the whipping head, which has both static and rotating pins where the gas is mixed with the fat based mass. The speed of the whipping head rotor can be varied to give the required level of bubble dispersion. The head and pipe work is usually water jacketed to keep the mass cool and aid whipping. Water temperatures in the range of 15°C - 32°C are required depending on mass throughput and whipping head speed. After whipping, the mass continues under pressure to the point of deposit. The Haas®-Mondomix system is a continuous whipping machine, so to maintain a continuous mass throughput and pressure, a pressure regulator device is situated on a spur, which allows product to purge to atmosphere. This device is set to maintain a suitable pressure in the whipping head, preferably in the range (3-9 bar). Mass not deposited passes out to atmospheric pressure via this device, thus keeping a constant pressure in the system.

A suitable depositing device would be a pressurized piston depositor, fed from the pressurized part of the Haas®-Mondomixer circuit after the whipping head. An example of such a device would be the apparatus for depositing a food product described in EP 1 064 852 to Nestlé, appropriately modified to handle aerated fat based material.

One of the major advantages of the present invention lies in the fact that the shape of the moulded confectionery shell is such that when a soft filling is deposited into the bottom of the shell and then a crisp solid confectionery material such as a sandwiched wafer finger is placed on top, the support means (for example ribs, internal protuberences or dividing walls) are so disposed as to prevent the wafer compressing the soft filling and damaging it. This provides a further advantage as if the filling is compressed, the wafer drops too low in the moulded shell and so the subsequent application of chocolate to provide a back to the product ("backing off") will lead to too much chocolate being incorporated in the product, compromising the desired texture and in many cases increasing the ingredient cost of the product. Preferably the support means also divide the moulded confectionery product into discrete portionable sections or "pips".

In an embodiment of the invention, the fat-based aerated material can also comprise pieces of hazelnuts, walnuts, coconuts, almonds, macadamia nuts, peanuts, cashew nuts, pistachio nuts, chestnuts, chocolate, wafers, sugar or fruits.

Defined shapes, such as are provided by moulding, provide visual attraction and product identity for indulgent confectionery products. A combination of soft confectionery filling and crisp wafer provides a pleasant textural contrast. The indulgent texture of a soft cream is further enhanced by aerating it.

The product of the invention is moulded. Suitable moulding materials include dark, milk or white chocolate, compound or couverture. The coating material may also include products derived from sugar with or without milk derived components, and fat and solids from vegetable or cocoa sources in differing proportions. The moulding material may include chocolate substitutes containing direct cocoa butter replacements, stearines, coconut oil, palm oil, butter or any mixture thereof; nut pastes such as peanut butter and fat; praline; confectionery's coatings also known as compounds or couvertures, used for covering ice cream or cakes usually comprising chocolate or analogues with cocoa butter replaced by a cheaper non-tempering fat; or Caramac® sold by Nestlé comprising non-cocoa butter fats, sugar and milk. Traditional chocolate normally contains from 28 to 35 % fat and in this invention, fat based confectionery material may, if desired, contain normal amounts of fat or less than the normal amount of fat present in chocolate, e.g., it may contain from 16 to 35 % total fat and preferably 20 to 30 % total fat. Fats can be chosen among traditional chocolate fats such as cocoa butter and/or vegetable fats to provide product compositions with amounts of low melting triglycerides and ratios of triglycerides which are typical for chocolate or chocolate-like substances.

### Examples

The following examples are illustrative of some of the products and methods of making the same falling within the scope of the present invention. They are not to be considered in any way limitative of the invention. Changes and modifications can be made with respect to the invention. That is, the skilled person will recognise many variations in these examples to cover a wide range of formulas, ingredients, processing, and mixtures to rationally adjust the naturally occurring levels of the compounds of the invention for a variety of applications.

### Example 1 :

A soft filling was prepared from the following ingredients:

| | |
|---|---|
| Hazelnut paste | 25 % |
| Skimmed Milk Powder | 31 % |
| Milk Fat | 11 % |
| Vegetable fat (Solid fat content of 16% at 25°C) | 15% |
| Sucrose | 18% |

The hazelnut paste, skimmed milk powder, sucrose and a small amount of milk fat (to give a total fat of 25%) were refined in a roll refiner to a particle size where 90% of the particles were below 80 microns. The remaining ingredients were then mixed in.

The filling was aerated with carbon-dioxide to a density of around 0.7g/cm³ in a Haas®-Mondomix machine.

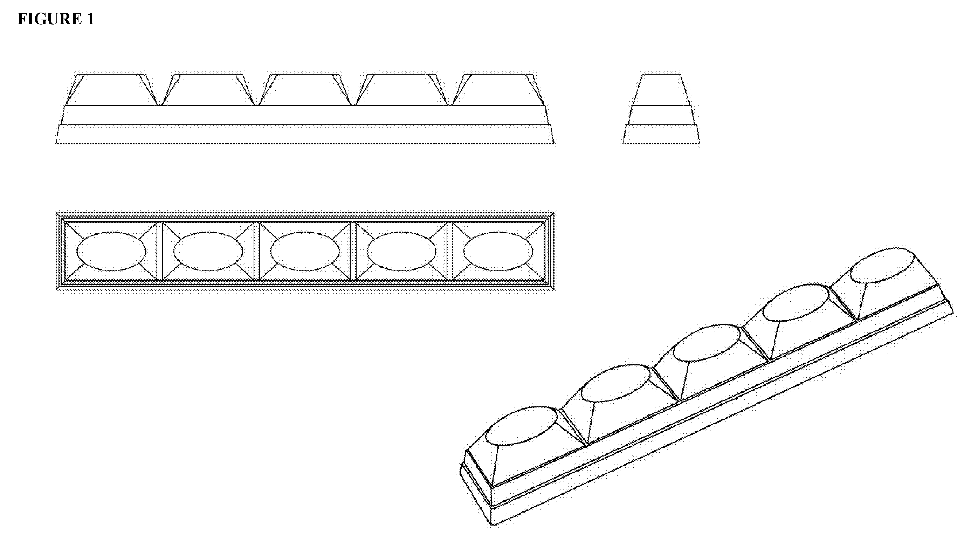

The filling was introduced into moulded confectionery products having two different mould shapes. Mould A, which was shaped to create the product shape shown in Figure 1, had dividing rib points according to the invention, whereas for comparison Mould B was a simple mould with straight sides and a tapered cross section and no dividing rib points.

A tempered chocolate shell was formed in the moulds and then the aerated filling was deposited into the shell, the quantity being chosen to leave enough space for a sandwiched wafer finger and a thin "back" of chocolate. A sandwiched wafer finger was then placed in the mould and pressed into place. The mould was then backed-off with tempered chocolate which was scraped flush with the top of the mould in the usual way.

The moulds were then cooled in the conventional manner and, once the chocolate had solidified, the moulds were inverted and the moulded chocolate removed.

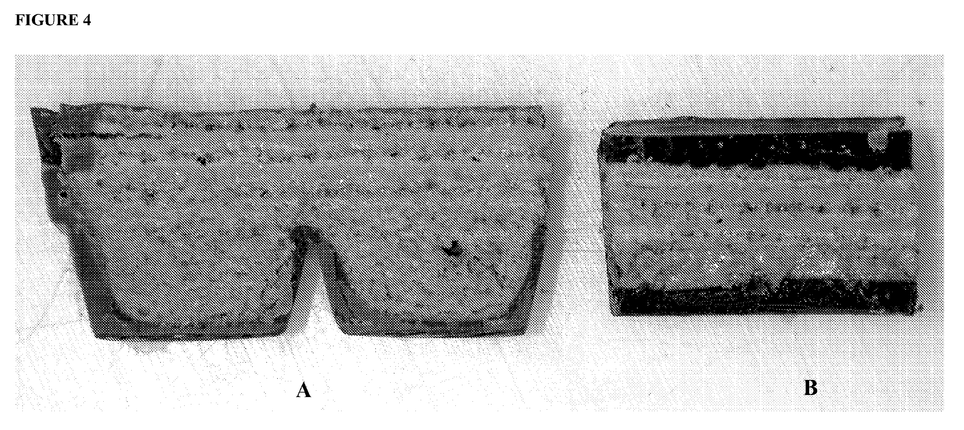

Figures 3 and 4 show a comparison between a product formed in Mould A on left with that formed using Mould B on the right. The product is orientated as it was in the mould during manufacture, in other words the soft filling (which in the product as presented to the consumer at the top of the product) is shown at the bottom of the product. It can be seen that in Mould A, the wafer finger is maintained in position above the cream, prevented from descending further by the rib points and avoiding the collapse of the aerated cream. For Mould B, the absence of rib points has lead to the collapse of the cream and a proportion of the cream being displaced above the wafer. The incorrect position of the wafer and collapse of the cream has led to an undesirable thick layer of chocolate occupying the top of the mould.

### Example 2: Penetrometry method and result when applied to filling in example 1

To measure the softness of the aerated filling, a portion of chocolate was carefully removed with a scalpel to expose the filling. The softness of the filling was tested using a TA.HDplus Texture Analyser from Stable Micro Systems, Godalming, Surrey, U.K. The instrument was fitted with a 50 N load cell, and compressive forces applied through a flat-tipped, stainless steel cylindrical probe of diameter 2 mm, the principal axis of the probe being directed normal to the surface of the specimen. The testing speed was 1 mm/sec, and the depth of penetration 4.200 mm. Data acquisition at 200 Hz was triggered by a threshold force of 5 mN. Data were analysed using a software 'macro' provided with the instrument, via which were obtained both the maximum force over the whole deformation range and the average force in the deformation range 1 - 4 mm. The tests were carried out at 20°C temperature and repeated on 10 different samples.

| Test ID | Mean Force N 1mm - 4mm depth | Max force N |
|---|---|---|
| Repeat 1 | 0.123 | 0.153 |
| Repeat 2 | 0.061 | 0.08 |
| Repeat 3 | 0.113 | 0.196 |
| Repeat 4 | 0.077 | 0.097 |
| Repeat 5 | 0.078 | 0.12 |
| Repeat 6 | 0.096 | 0.143 |
| Repeat 7 | 0.123 | 0.15 |
| Repeat 8 | 0.071 | 0.096 |
| Repeat 9 | 0.08 | 0.116 |
| Repeat 10 | 0.079 | 0.101 |
| | | |
| **Average:** | **0.09** | **0.125** |
| **S.D.** | **0.022** | **0.035** |

## Claims

1. Moulded confectionery product having a defined shape comprising
a) a lower part comprising a crisp base,
b) an upper part comprising a soft filling
**characterized in that** the moulded confectionery shell is so formed as to have support means which prevent the crisp base descending into the shell and compressing the soft filling when the crisp base is placed into the mould.

2. Confectionery product according to claim 1 wherein the shell container contains more than one part.

3. Confectionery product according to claim 1-2 wherein the moulded confectionery is chocolate moulded.

4. Confectionery product according to claim 1-3 wherein the support means consist of ribs, internal protuberances or dividing walls.

5. Confectionery product according to any of claims 1 to 4 wherein the filling is aerated.

6. Confectionery product according to any of claims 1 to 5 wherein the crisp base comprises wafer.

7. Confectionery product according to any of claims 1 to 6 wherein the filling further comprises pieces of hazelnuts, walnuts, coconuts, almonds, macadamia nuts, peanuts, cashew nuts, pistachio nuts, chestnuts, chocolate, wafers, sugar or fruits.

8. Confectionery product according to any of claims 1 to 7 wherein the product is a bitesized product.

9. Edible product comprising the moulded confectionery product according to any of claims 1 to 8.
